# EUROPEAN PATENT SPECIFICATION

(11) **EP 0 381 250 B1**
(45) Date of publication and mention of the grant of the patent: **24.08.1994**
(21) Application number: 90104944.5
(22) Date of filing: 15.01.1986
(51) Int. Cl.: A47J 37/07, A47J 27/212, G01K 1/00, G01K 1/14, G01K 13/00

(54) **Dual purpose thermometer in combination with a gas grill**
Thermometer mit zwei Verwendungsmöglichkeiten in Kombination mit einem Gas-Grillgerät
Thermomètre à double usage combiné à un grill au gaz

(30) Priority: 26.07.1985 US 759531; 08.08.1985 US 763858
(43) Date of publication of application: 08.08.1990
(62) Divisional of application: 86900949.8
(73) Proprietor: WEBER-STEPHEN PRODUCTS CO., Palatine, IL 60067 (US)
(72) Inventor: Stephen, James C., Arlington Heights, IL 60004 (US); Schlosser, Erich J., Barrington, IL 60010 (US); Andrzej, Lejy, Nr. 204 Palatine, IL 60067 (US)
(74) Representative: Strehl Schübel-Hopf Groening & Partner

(56) References cited:
- FR-A- 1 383 896
- US-A- 2 276 178
- US-A- 3 812 840

## Description

The present invention relates to a combination with a portable grill having a fire box and a cover with a combustion source in said fire box and a food support grid above said combustion source, a thermometer supported on said cover for sensing the internal temperature in said fire box.

A grill of this type is known from US-A-3 812 840. The thermometer of said known grill is supplied at a convenient location on one wall of the cover and is adapted to display the temperature within a compartment defined by the cover and which is located above a food grill when the cover is in the closed position.

US-A-2 276 178 discloses a thermometer for use in roasting meats to indicate when the roast is done. Said bi-metallic thermometer has a spacing chamber between a dial housing and a thermometer tube to facilitate the handling of the thermometer when inserting or withdrawing the thermometer from the meat. A portion of the wall of the spacing chamber, which forms part of the dial housing, forms a continuation of the thermometer tube so that this portion of the wall is brought into contact with the roast on the insertion of the thermometer thereinto in order to provide a heat exchange between the dial housing and the roast that will keep the higher temperature of the dial housing, due to its exposure to the oven heat, from reaching the be-metallic element so that it cannot influence the operation of this element by the temperature of the inside of the roast. Said meat thermometer is provided with gauge means in order to ensure uniform insertion of the thermometer into the meat.

FR-A-1 383 896 discloses a rolling kitchen having two cooking-pots of which one cooking-pot is surrounded by a glycerin bath. A tube is positioned on a cover of the cooking-pot and the glycerine bath so that the condition of the glycerin bath can be analysed and the bath can be vented from air. A housing is provided on the upper end of that tube containing a thermometer being lowered into said glycerin bath.

It is an object of the present invention to improve a grill of the above-mentioned type in that way that the internal temperature of the cooking-chamber or, alternatively, the internal temperature of the food or meat that is being cooked, can be sensed.

As to achieve this object the invention is characterized in that said thermometer extending from an indicator dial through said cover; said cover has an opening with frictional gripping means between said cover and said thermometer to releasably retain the thermometer in the opening, so that in normal operation, the piercing portion is received through said opening in the front portion of cover to be readily visible for viewing by the operator, and that, if it is desired to sense the temperature of meat cooked on the grill, said thermometer is removable from the cover and insertable into the food product where the temperature is then sensed as a function of the meat temperature rather than the chamber temperature.
Fig. 1 is a fragmentary perspective view of the firebox with the cover in a closed position;
Fig. 1A is an enlarged cross section, as viewed along line 1-1 of Fig. 1;
Fig. 2 is a cross-sectional view, as viewed along line 2-2 of Fig. 1;
Fig. 3 is an end view of the sear bar that is used to define a sear grid within the chamber;
Fig. 4 is a cross-sectional view, as viewed along line 4-4 of Fig. 2.

The drawings show a gas grill consisting of a portable cart and a cooking vessel or chamber.

The cart is preferably formed from a plurality of hollow rectangular tubular members, including a pair of rear vertical posts that define legs supported on wheels at the lower end thereof. A second pair of vertical posts 36 extend upwardly and define the remaining two legs. The upper portion of the cart includes a pair of spaced parallel side members 40 which are interconnected by one or more cross-members 42. The side members 40 are defined by at least two end-to-end tubular members that are interconnected without the use of any special tools or complicated fasteners.

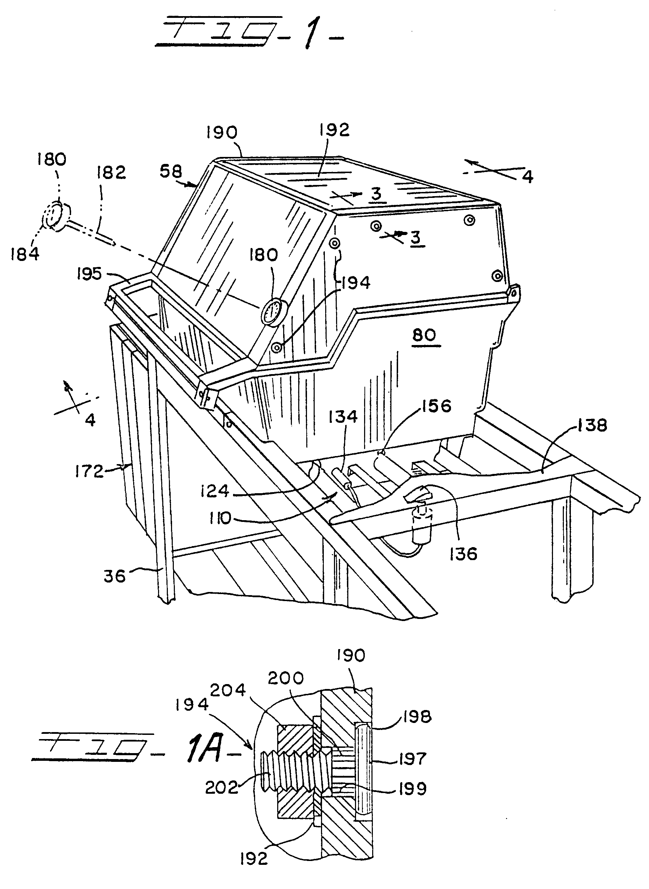

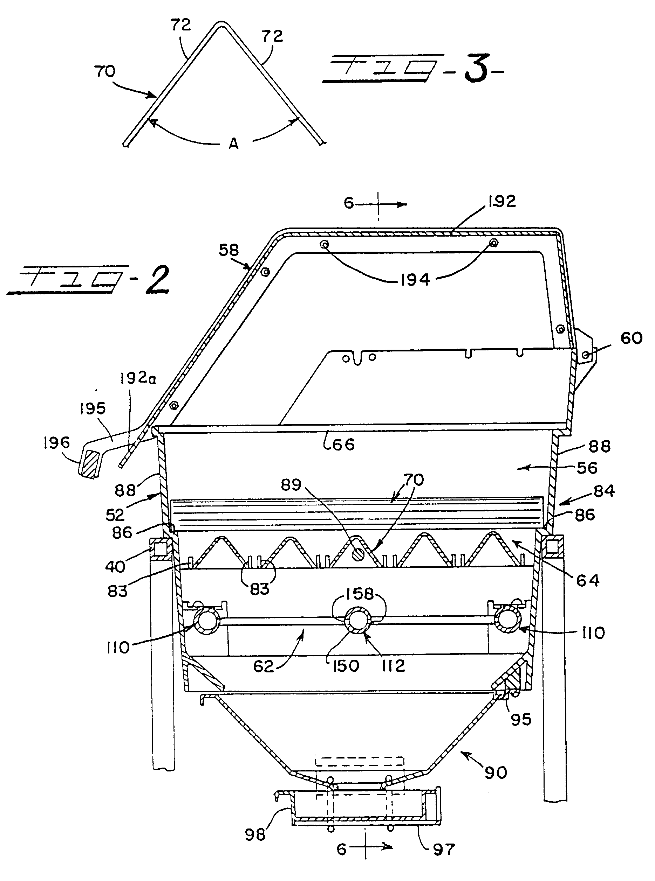

The cooking vessel or housing consists of a lower housing or portion 52 (Fig. 2) defining a chamber 56 and having a cover 58 secured by a hinge 60 to one upper edge of one of the sidewalls that form the chamber 56. The lower chamber has a burner assembly 62 located in a lower portion thereof and a sear grid arrangement 64, located above the burner assembly 62 and a cooking grid 66.

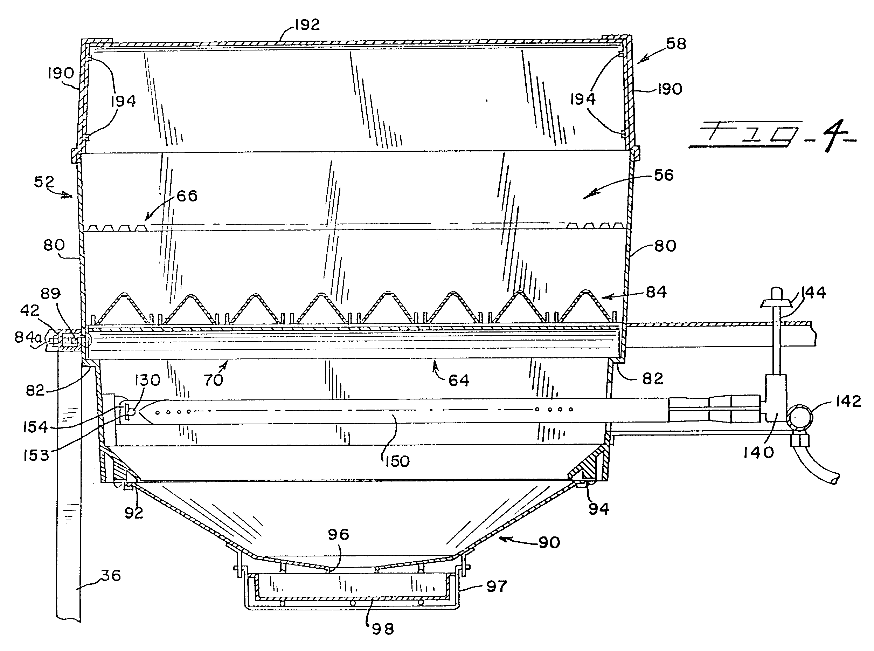

The sear grid 64 includes a plurality of V-shaped sear bars (Fig. 3), generally designated by reference numeral 70, and each sear bar 70 consists of a pair of inclined walls 72 that define an included angle A to produce the desired function of the sear bars. The included angle A is preferably less than 90°, and in the illustrated embodiment the angle is illustrated to be about 75°, but could be about 50° to about 80°.

The inverted V-shaped sear bar 70 is preferably formed from a metal material having good heat conducting characteristics, such as cold-rolled steel, which has a porcelain enamel coating thereon. The two inclined walls 72 define smooth outer inclined flat surfaces that will receive dripping from food, such as meats, being cooked and cause the drippings to flow along the inclined surfaces.

Because of the inverted V-shaped nature of the sear bars, and the fact that they are formed of metal which has good heat conduction, the heat from the burner assembly 62 will be trapped between the sidewalls and will quickly heat the entire sear bar to a temperature sufficient for causing a desired amount of grease received on the outer surfaces of the sidewalls 72 to vaporize and the remaining grease will pass through the sear grid 64 into a lower grease collector unit. In the preferred embodiment, the sear grid 64 is formed by five identically-constructed sear bars 70 that are supported in a predetermined position within the lower chamber 56 with small narrow spaces between adjacent bars that allow the heat to move upwardly into the upper portion of the lower chamber which supports the cooking grill or grid 66.

The sear bars are supported within the chamber such that there is no need for any fasteners, and the sear bars may be merely dropped into position. As illustrated in Fig. 4, the front and rear walls 80 of the housing each have an offset portion 82 that define upwardly-facing ledges within the chamber 56. Thus, the sear bars 70 may readily be dropped into position as shown in Figs. 2 and 3 and the opposite ends will rest on the ledges 82. The ledges 82 have positioning elements 83 for defining a predetermined position between respective sear bars, as is shown in Fig. 2.

While not necessary, the grill includes a second set of sear bars 70 identical to the first set, except for length, that define a second sear grid 84. Again, the sear bars 70 are supported on ledges defined by offsets 86 in the sidewalls 88 of the chamber 56. The ledges 86 again have positioning elements 83 so that the sear bars (Fig. 4) can be dropped into position without the use of any fasteners.

It has been found that the second sear grid 84, in conjunction with the first sear grid 64, will provide more uniform heat for the cooking process then was heretofore possible in utilizing lava rock or other types of heat-absorbing materials.

With the arrangement so far described, any grease or drippings off of the food being cooked will first hit the outwardly-inclined surface of the upper sear grid 84, which are hot and a desired amount of grease and drippings will vaporize while on the sear bars to provide the desired smoke flavoring for the food being cooked. Since each of the burner tubes of the burner assembly 62 is located directly below one inverted V-shaped sear bar, there is no chance of any grease being deposited directly onto the hot burners and any grease passing through the sear grids will be collected in the lower portion of chamber 56.

In this respect, the lower portion of the chamber 56 is defined by a grease collector unit 90. The grease collector unit 90 consists of a tapered tray that has an outwardly-directed lip 92 on the peripheral edge thereof and this outwardly-directed lip is supported on inwardly-directed L-shaped brackets 94 that define slide guides for removal of the tray. It should be noted that the walls of the housing extend below and outside of brackets 94 so that any water will be directed away from the inside of the tray. The collector tray or unit 90 has all of its walls tapering inwardly and downwardly, as shown in Figs. 3 and 4, so that all of the grease drippings will be directed to a central opening 96 in the center of the lowermost portion of the tray 90.

It should be noted that the lower housing 52 defining chamber 56 is formed as a one-piece casting to eliminate any seams on the inner surface. The housing has an inwardly-directed lip 95 that defines a continuous uninterrupted surface which overlaps the peripheral edge of the grease collector unit 90 to insure that no grease escapes from the housing. It should be noted that the bracket 94 is located below the inwardly-directed lip 95, which is an integral part of the cast housing 52.

A further smaller rectangular tray or collector 98 is located below the opening 96 and again is removably supported on a wire assembly 97. Thus, grease collected by the collector unit 90 will flow into the lower centermost opening 96 and into the small removable tray or cup 98, which can easily be removed and the grease discarded. Alternatively, if a large accumulation of grease should be caught on the tapered walls of the large collector unit 90, the entire unit can be removed and easily be cleaned and reinserted. The small removable tray collects most of the grease received into the collector and is spaced substantially below the burner units to eliminate any possibility of ignition.

The collector unit 90 may also be used as a broiler by providing a grill, such as a part of the two-piece grill 66.

The lower housing 52 is supported on the cart and is suspended on the side members 40. As shown in Fig. 2, the offsets 86 in the sidewalls 88 that form the ledges are positoned such that these ledges will rest on top of the side members 40 to support the entire cooking vessel within the rectangular opening defined by the side members 40. If desired, a single fastener 89 may be utilized for securing the entire cooking vessel to the cart, and this fastener is shown in Fig. 4 extending through the one end wall 80 and the cross member 82 and receives a nut 84a.

The burner assembly 62 is again structurally engineered such that the entire assembly can be assembled by a purchaser without the use of any special tools and in a simplified manner. Thus, as illustrated in Fig. 2, the burner assembly 62 consists of a pair of outer burner units 110 and an intermediate burner unit 112. The outer burner units 110 are identical in construction and are interchangeable with each other.

The burner unit 110 can easily be assembled into the chamber merely by insertion of the end of the tube through an opening 124 in the opposite end wall (see Fig. 1). The burner unit 110 can then be secured at one end, while the opposite end rests on the edge of the opening 124 defined in the other end wall 80. Since the projection and slot are offset from the axis of the tube, there is no possibility of improper assembly of the two outer burner units 110. These burner units 110 have a row of small apertures that are positioned to be directed inwardly in the assembled condition, so that any gas will be directed to the center of the lower chamber.

A third burner unit 112 is preferably located intermediate the first and second burner units and again is easily assembled without the use of any tools. For this purpose, an open-ended connecting tube or pilot tube 130 extends between the two burner units 110 and has opposite ends received into openings located in the tubes. The opposite ends of the connecting or pilot tube 130, which is substantially smaller in diameter than the tubes of the first and second burner units, has a plurality of apertures (not shown) so that any gas received into the first burner unit, which is then ignited, will travel through the pilot tube 130 towards the second burner unit 110.

Thus, the first burner unit may be ignited by an electric ignitor 134 (Fig. 1), controlled by a switch 136 that is located on a control panel 138 for all of the burner units. The inner ends of the burner units 110 each having a control valve 140 located between a gas source tube 142 and the end of the burner tube. A control knob 144 extends from the control valve and is located above the control panel.

The third burner unit 112 is of slightly different construction and is positioned approximately equidistant between the outer burner units 110. The third burner units 112 again consists of a generally circular tube 150 that has a flattened portion on th outer free end thereof. The flattened portion has a slot 153 (Fig. 4) for receiving the tube 130 and a small projection or plate 154 welded to the surface of the tube 130 so that the inner burner unit is accurately positioned with respect to the remainder of the burner assembly. The center burner tube 150 extends through an intermediate opening 156 in the other end wall 80 (Fig. 3). The circular tube 150 has two sets of diametrically-opposed apertures 158 (Fig. 4). The intermediate unit 112 again has a valve 140 and control knob 144 as shown in Fig. 4.

With the construction of the burner assembly 62, as described above, all of the burner assembly 62 can be installed without the aid of any tools. In assembling the burner assembly, the center burner unit 112 is inserted through the intermediate opening 156 and tube 130 is moved through the slot 153 in the end of the flattened end portion 152. One end of the tube 130 is then inserted into the opening 132 in one of the burner units 110 after it has been inserted through an opening 124 and the opposite end is then moved into the opening of the second unit 110. Thus, the inner free ends of the burner units are interconnected by the single connecting tube 130 which defines the support for the inner end of the intermediate burner 112.

The burner assembly 62 can be ignited in sequential order, first by igniting the front burner unit 110 with the ignitor 134 by depressing of the switch 136 on control panel 138. A hole may be provided in the lower chamber for manual ignition, if desired. After the first burner unit is ignited, the second outer burner unit 110 merely needs to have gas supplied thereto and the cross-pilot tube 130 will provide the ignition for the gas in the second burner unit. Likewise, the supply of gas to the intermediate burner unit will automatically be ignited by the flames from the apertured cross-tube 130.

While the burner units have been shown as linear tubes, other configurations could be used so long as the sear bars have the same configuration as the enlongated burner tubes. For example, the burner tubes could be U-shaped in plan view.

The working surface could be of the type as being a working board that is supported on the side members 40 by brackets adjacent the cooking vessel. A further working board 172 may also be provided which is movable between stored and usable positions respectively shown in Fig. 1.

The working board 172 is preferably connected along one edge by a hinge on the side member 40 and is supported in the usable position, extending generally horizontally by a support rod. The support rod is pivotally supported on the lower surface of the board 172 and has an offset outer free end received around the leg 36. The same offset portion may be received in the other leg 36 so that the working board 172 remains in a fixed stored position when not in use.

According to this invention, the grill 20 incorporates a removable thermometer 180 in the cover 58, which can be utilized for sensing the internal temperature of the cooking chamber or, alternatively, the internal temperature of the food or meat that is being cooked. Thus, the thermometer 180 includes a conventional piercing portion 182 extending from an indicator dial 184. In normal operation, the portion 182 is received through an opening (not shown) in the front portion of cover 58 to be readily visible for viewing by the operator. When it is desired to sense the temperature of meat that is being cooked on the grill, the thermometer is merely removed and inserted into the food product, where the temperature is then sensed as a function of the meat temperature rather than the chamber temperature.

The cover 58 consists of two cast end caps 190 and an insert 192 formed of non-metallic material, which are inter-connected through the use of special flush-headed bolts 194. The end caps 190 have extensions 195 with a handle 196 secured to the extensions.

As illustrated in Fig. 1A, the bolt 194 has an enlarged head 197 received with an enlarged recess 198 surrounding an opening 199 in end piece 190. The bolt 194 has a serrated portion 200 that provides a friction grip in the opening 199. The bolt 194 also has a threaded portion 202 received through an opening in the insert 192 and receives a nut 204. Thus, the bolt 194 can be inserted into the opening 199 and nut 204 can be used to draw the serrated portion 200 into the opening. The serrated portion 200 will prevent the bolt 194 from turning in the opening. After the nut has been tightened, the recessed head 197 will not protrude beyond the outer surface of the end piece 190, as shown in Fig. 1A.

As shown in Fig. 2, the porcelain-coated metal insert 192 has an extension 192a which extends between the handle 196 and sidewall 88 of housing 52. The extension acts as a heat shield to prevent the handle from overheating.

## Claims

1. In combination with a portable grill having a fire box and a cover with a combustion source in said fire box and a food support grid above said combustion source, a thermometer supported on said cover for sensing the internal temperature in said fire box,
characterized in that said thermometer (180) includes a conventional piercing portion (182) extending from an indicator dial (184) through said cover; said cover (58) has an opening with frictional gripping means between said cover (58) and said thermometer (180) to releasably retain the thermometer (180) in the opening, so that, in normal operation, the piercing portion (182) is received through said opening in the front portion of cover (58) to be readily visible for the viewing by the operator, and that, if it is desired to sense the temperature of meat cooked on the grill, said thermometer (180) is removable from the cover (58) and insertable into the food product where the temperature is then sensed as a function of the meat temperature rather than the chamber temperature.

## Patentansprüche

1. In Kombination mit einem tragbaren Grill mit einem Feuerungskasten und einer Haube, mit einer Feuerquelle im Feuerungskasten und einem Lebensmittelablagerost oberhalb der Feuerquelle, ein an der Haube angebrachtes Thermometer zur Erfassung der Innentemperatur im Feuerungskasten,
dadurch gekennzeichnet, daß das Thermometer (180) einen konventionellen Einstechabschnitt (182) umfaßt, der sich von einer Anzeigenskala (184) durch die Haube erstreckt; wobei die Haube (58) eine Öffnung mit Reibungsgreifelementen zwischen der Haube (58) und dem Thermometer (180) zur entfernbaren Halterung des Thermometers (180) in der Öffnung aufweist, so daß der Einstechabschnitt (182) im normalen Betrieb in der Öffnung im Frontabschnitt der Haube (58) aufgenommen ist, um zur Ansicht durch den Benutzer leicht sichtbar zu sein, und falls die Erfassung der Temperatur des auf dem Grill gebackenen Fleisches erwünscht ist, das Thermometer (180) von der Haube (58) entfernbar ist und in das Lebensmittelprodukt einführbar ist, wo dann die Temperatur als Funktion der Fleischtemperatur anstelle der Kammertemperatur erfaßt wird.

## Revendications

1. En combinaison avec un grill portable, présentant une chambre de combustion et un couvercle, avec une source de combustion dans ladite chambre de combustion et une grille de support d'aliment au-dessus de ladite source de combustion, un thermomètre monté sur ledit couvercle, afin de mesurer la température intérieure, dans ladite chambre de combustion,
caractérisé en ce que ledit thermomètre (180) comprend une partie traversante (182), classique s'étendant depuis un cadran indicateur (184), à travers ledit couvercle; ledit couvercle (58) présente une ouverture pourvue de moyens de saisie à friction, entre ledit couvercle (58) et ledit thermomètre (180), afin de maintenir de façon amovible le thermomètre (180) dans l'ouverture, de manière que, en fonctionnement normal, la partie traversante (182) soit logée dans ladite ouverture ménagée dans la partie avant du couvercle (58), afin de pouvoir être facilement vue par l'opérateur et que, si l'on souhaite mesurer la température de l'aliment cuit sur le grill, ledit thermomètre (180) puisse être retiré du couvercle (58) et inséré dans le produit alimentaire, la température étant alors mesurée en fonction de la température de l'aliment, plutôt que de la température de la chambre.
